# EUROPÄISCHE PATENTSCHRIFT

(11) **EP 2 729 828 B1**
(45) Veröffentlichungstag und Bekanntmachung des Hinweises auf die Patenterteilung: **05.10.2022**
(21) Anmeldenummer: 12721471.6
(22) Anmeldetag: 08.05.2012
(51) Int. Cl.: G01S 13/87, G01S 13/93

(54) **RADARSYSTEM FÜR KRAFTFAHRZEUGE SOWIE KRAFTFAHRZEUG MIT EINEM RADARSYSTEM**
RADAR SYSTEM FOR MOTOR VEHICLES, AND MOTOR VEHICLE HAVING A RADAR SYSTEM
SYSTÈME RADAR POUR VÉHICULES AUTOMOBILES AINSI QUE VÉHICULE AUTOMOBILE POURVU D'UN SYSTÈME RADAR

(30) Priorität: 05.07.2011 DE 102011078641
(43) Veröffentlichungstag der Anmeldung: 14.05.2014
(73) Patentinhaber: Robert Bosch GmbH, 70442 Stuttgart (DE)
(72) Erfinder: BINZER, Thomas, 74379 Ingersheim (DE); WALDSCHMIDT, Christian, 71272 Renningen (DE); HELLINGER, Raphael, 75181 Pforzheim (DE)
(86) Internationale Anmeldenummer: PCT/EP2012/058455
(87) Internationale Veröffentlichungsnummer: WO 2013/004418

(56) Entgegenhaltungen:
- EP-A1- 2 026 099
- WO-A1-2009/081252
- DE-A1-102009 057 191
- FR-A1- 2 821 039

## Beschreibung

Die Erfindung betrifft ein Radarsystem für ein Kraftfahrzeug, ein Kraftfahrzeug mit einem Radarsystem sowie die Verwendung eines Radarsystems in einem Kraftfahrzeug.

### Stand der Technik

Radarsysteme in Kraftfahrzeugen werden häufig eingesetzt, um Abstände beispielsweise mit Hilfe des Doppler-Effektes und/oder Relativgeschwindigkeiten anderer Kraftfahrzeuge oder sonstiger Objekte im Verkehrsumfeld des Kraftfahrzeugs zu messen.

Dabei dienen derartige Radarsysteme auch dazu, insbesondere eine Überwachung des Verkehrs auf Nachbarspuren zu ermöglichen. Ein derartiges Radarsystem für ein Kraftfahrzeug ist beispielsweise aus der DE 10 2004 004 492 A1 bekannt geworden. Darin ist ein Radarsystem für ein Kraftfahrzeug mit mindestens einem Radarsensor gezeigt, wobei der Radarsensor eine phasengesteuerte Antenne und eine Steuereinrichtung zur Einstellung mehrerer Radarkeulen mit unterschiedlicher Geometrie aufweist, um Verkehr auf einer Nachbarspur des Kraftfahrzeugs zu erkennen.

Darüber hinaus ist aus der DE 10 2004 028 613 A1 ein Spurwechselassistent für ein Kraftfahrzeug bekannt geworden. Der Spurwechselassistent umfasst dabei eine Einrichtung zur Bestimmung eines Gefahrenwertes anhand von Ortungsdaten der von dem Spurwechsel betroffenen Fahrzeuge, dergestalt, dass eine Erfassungseinrichtung für Umweltbedingungen vorhanden ist, und dass der bestimmte Gefahrenwert auch von den erfassten Umweltbedingungen, beispielsweise von der Umgebungshelligkeit oder der Regenmenge, abhängig ist.

Zur Abstrahlung und zum Empfangen von Radarstrahlung weisen derartige Radarsensoren Antennen auf, die beispielsweise im automobilen Bereich üblicherweise als so genannte Patch-Antennen auf einem HF-Substrat ausgeführt werden. Dabei werden getrennte Antennen für die Abstrahlung eines Sendesignals und für den Empfang des reflektierten Signals verwendet. Um eine Winkelschätzung eines vorbeifahrenden Fahrzeugs vornehmen zu können, werden Phasenunterschiede der empfangenen Radarsignale in Kanälen der Empfangsantenne ausgewertet. Um eine definierte Richtung, für Sendesignale zu erreichen, können durch Ansteuerung einzelner Antennenelemente mit unterschiedlichen Phasen die Abstrahlrichtung, Antennenkeule bzw. der Sichtbereich der Sende- und Empfangsantenne in verschiedene Richtungen geschwenkt werden. Durch die immer größer werdende Anzahl von zusätzlichen Fahrerassistenzsystemen wie beispielsweise Totwinkelassistent, Spurwechselassistent oder Querverkehrs-Erkennungsassistent müssen viele verschiedene Radarsensoren mit jeweils unterschiedlichen Anforderungen hinsichtlich Genauigkeit, Abstrahl- und/oder Empfangsrichtungen, etc. in das Kraftfahrzeug eingebaut werden. Diese benötigen jedoch viel Platz und sind kostenintensiv.

DE 10 2009 057191 A1 offenbart ein Verfahren zum Bestimmen einer Entfernung und/oder einer relativen Geschwindigkeit eines Objektes, sowie eine Fahrerassistenzeinrichtung.

### Offenbarung der Erfindung

Die vorliegende Erfindung offenbart ein Radarsystem für Kraftfahrzeuge, ein Kraftfahrzeug mit einem Radarsystem und die Verwendung eines Radarsystems in einem Kraftfahrzeug gemäß den Merkmalen der unabhängigen Patentansprüche.

### Vorteile der Erfindung

Ein mit der Erfindung erzielter Vorteil ist, dass damit auf einfache und kostengünstige Weise mehrere Fahrerassistenzsysteme, beispielsweise Totwinkelassistent, Spurwechselassistent und Querverkehrsassistent mittels einer möglichst geringen Anzahl von Radarsensoren zur Verfügung gestellt werden kann.

Weitere vorteilhafte Weiterbildungen der Erfindung sind in den Unteransprüchen beschrieben.

Gemäß einer vorteilhaften Weiterbildung der Erfindung sind zumindest zwei Radarsensoren jeweils symmetrisch zueinander angeordnet. Der damit erzielte Vorteil ist, dass damit auf besonders zuverlässige Weise eine Überwachung des Umfeldes des Kraftfahrzeuges mittels des Radarsystems ermöglicht wird. Daneben kann auch ein möglichst großer Bereich des Umfeldes des Kraftfahrzeugs überwacht werden.

Gemäß einer weiteren vorteilhaften Weiterbildung der Erfindung ist zumindest einer der Radarsensoren ausgebildet, im Wesentlichen gleichzeitig zumindest zwei hinsichtlich ihrer Richtung unterschiedliche Sichtbereiche der zumindest einen Antenne bereitzustellen. Der damit erzielte Vorteil ist, dass die zumindest zwei Sichtbereiche hinsichtlich ihrer dreidimensionalen räumlichen Ausdehnung flexibel und zuverlässig entsprechend an die gewünschten Anforderungen angepasst werden können.

Erfindungsgemäß ist eine Steuereinrichtung zur Steuerung der Sichtbereiche der zumindest einen Antenne zumindest eines der Radarsensoren angeordnet. Der damit erzielte Vorteil ist, dass sich damit auf einfache und zuverlässige Weise die Sichtbereiche der jeweiligen Radarsensoren, beispielsweise wenn das Radarsystem in ein Kraftfahrzeug eingebaut ist, an wechselnde Umweltbedingungen, beispielsweise Regen, etc. anpassen lassen. So ist mit der Steuereinrichtung beispielsweise bei schlechter Witterung eine Verstärkung der Sendeleistung der Antenne möglich, ebenso ist beispielsweise eine besondere Fehlerkorrektur beim Empfangen und insbesondere Verarbeiten der von einem vorausgehenden Kraftfahrzeug rückgestrahlten und durch das Radarsystem empfangenen Radarstrahlen möglich.

Erfindungsgemäß ist die Steuereinrichtung ausgebildet, den Sichtbereich zumindest einer Antenne zumindest eines Radarsensors zwischen +45 Grad, 0 Grad und -45 Grad bezogen auf die Hauptabstrahlrichtung des zumindest einen Radarsensors einzustellen. Auf diese Weise lässt sich der Sichtbereich der zumindest einen Antenne des Radarsensors derart verschwenken sodass, insbesondere wenn die zumindest zwei Radarsensoren jeweils in einem Winkel zwischen 40 Grad und 50 Grad zu der Achse angeordnet sind, jeweils durch den verschwenkbaren Bereich des Sichtbereichs ein Überwachungsbereich von insgesamt 90 Grad erreicht werden kann, sodass sowohl seitliche Bereiche als auch Front- oder Heckbereiche eines Kraftfahrzeugs überwacht werden können.

Zumindest eine der Antennen zumindest eines Radarsensors weist Sichtbereiche auf, die für unterschiedliche Winkel relativ zu der Hauptabstrahlrichtung des jeweiligen Radarsensors unterschiedlich ausgebildet sind. Auf diese Weise kann der Einsatzbereich des Radarsystems noch besser auf die jeweiligen Anforderungen abgestimmt werden, da für unterschiedliche Winkel die Sichtbereiche, beispielsweise dreidimensionale Formen der Sichtbereiche, unterschiedlich ausgebildet werden können.

Gemäß einer weiteren vorteilhaften Weiterbildung der Erfindung umfasst zumindest ein Radarsensor eine Mehrzahl von phasengesteuerten Antennen, deren jeweiliger Sichtbereich mittels Amplituden- und/oder Phasenmodulation verschwenkbar ist. Auf diese Weise wird eine einfache und kostengünstige Verschwenkbarkeit der Sichtbereiche der Antennen des jeweiligen Radarsensors sichergestellt.

Gemäß einer weiteren vorteilhaften Weiterbildung des Kraftfahrzeugs gemäß Anspruch 8 sind zumindest vier Radarsensoren symmetrisch links und rechts der Fahrzeuglängsachse und in einem Front- und Heckbereich des Kraftfahrzeugs, angeordnet, wobei die Radarsensoren mit einem jeweiligen Winkel von 45 Grad zur Fahrzeuglängsachse angeordnet sind. Auf diese Weise wird sichergestellt, dass sowohl der Front- und Heckbereich des Kraftfahrzeugs mittels der Radarsensoren überwacht werden kann als auch der jeweilige linke und rechte Seitenbereich des Kraftfahrzeugs. Auf diese Weise wird im Wesentlichen das gesamte Verkehrsumfeld des Kraftfahrzeugs überwacht.

### Kurze Beschreibung der Zeichnungen

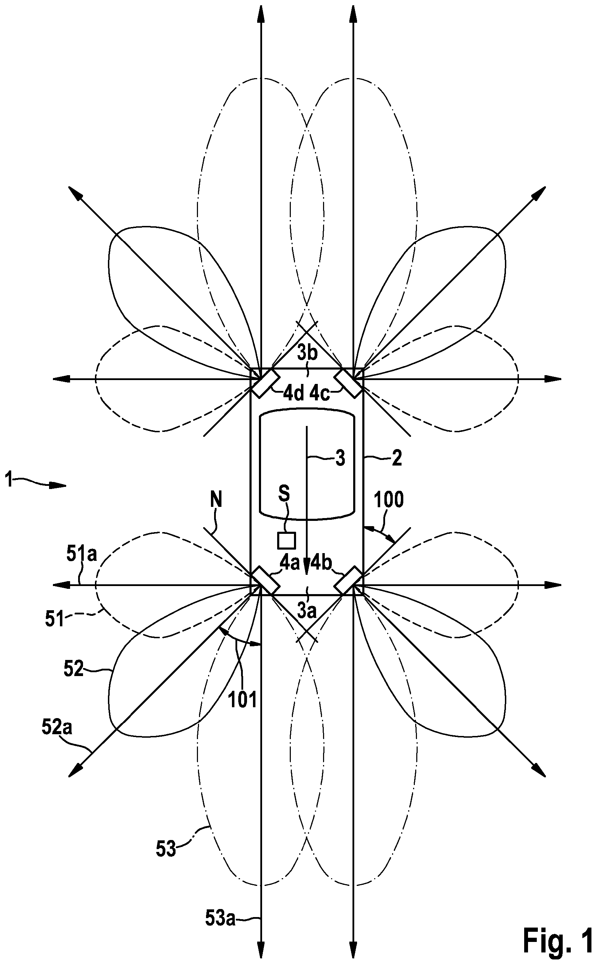

Weitere Merkmale und Vorteile der Erfindung ergeben sich aus der nachfolgenden Beschreibung eines Ausführungsbeispiels anhand der Zeichnung. Dabei zeigt in schematischer Form
- Figur 1:: in der Draufsicht ein Kraftfahrzeug mit einem Radarsystem gemäß einer Ausführungsform der vorliegenden Erfindung.

### Ausführungsformen der Erfindung

Figur 1 bezeichnet Bezugszeichen 1 ein Radarsystem gemäß einer Ausführungsform der vorliegenden Erfindung, eingebaut in ein Kraftfahrzeug 2. Das Kraftfahrzeug 2 weist eine Fahrzeuglängsachse 3 auf wobei in einem Frontbereich 3a des Kraftfahrzeugs 2 in einem Winkel von jeweils 45 Grad auf der linken und rechten Seite der Fahrzeuglängsachse 3 jeweils ein Radarsensor 4a, 4b und in einem Heckbereich 3b des Kraftfahrzeugs 2 in einem Winkel von jeweils im Wesentlichen 45 Grad ein weiterer Radarsensor 4c, 4d angeordnet sind.

Im Folgenden wird einer der vier Radarsensoren 4a und seine Ausbildung beschrieben. Die Ausbildung der weiteren drei Radarsensoren 4b, 4c, 4d entspricht dabei im Wesentlichen in analoger Weise dem des beschriebenen Radarsensors 4a.

Wie bereits vorstehend ausgeführt, ist der Radarsensor 4a in einem Winkel 100 von im Wesentlichen 45 Grad zur Fahrzeuglängsachse 3 des Kraftfahrzeugs 2 angeordnet. Die Hauptabstrahlrichtung 52a ist dabei senkrecht zur Normalen N des Radarsensors 4a und somit ebenfalls in einem Winkel von 45 Grad zur Fahrzeuglängsachse 3 des Kraftfahrzeugs 2 angeordnet. Der Sichtbereich 52 der Hauptabstrahlrichtung 52a ist dabei im Wesentlichen keulenförmig ausgebildet. Der Radarsensor 4a kann weiter in seiner Hauptabstrahlrichtung 52a um +45 Grad um den Winkel 101 verschwenkt werden, sodass nun die Abstrahlrichtung 53a parallel zur Fahrzeuglängsachse 3 ausgebildet ist. Der zugehörige Sichtbereich 53 kann dabei so ausgebildet werden, dass dieser zum Einen einen Teilbereich des Sichtbereichs 52 der Hauptabstrahlrichtung 52a mit abdeckt. Zum Anderen kann, da dieser parallel zur Fahrzeuglängsachse 3 ausgebildet ist, dessen Reichweite entsprechend vergrößert werden, um bei entsprechend hohen Geschwindigkeiten vorausfahrender Kraftfahrzeuge auch eine zuverlässige Erfassung des Umfeldes des rechten vorderen Bereiches 3a des Kraftfahrzeugs 2 zu ermöglichen. Weiterhin kann die Hauptabstrahlrichtung 52a auch um -45 Grad um den Winkel 101 verschwenkt werden, sodass nun die Abstrahlrichtung 51a im Wesentlichen senkrecht zur Fahrzeuglängsachse 3 des Kraftfahrzeugs 2 ausgerichtet ist. Der zugehörige Sichtbereich 51 der Abstrahlrichtung 51a kann dabei so ausgebildet sein, dass dieser einen Teilbereich des Sichtbereichs 52 der Hauptabstrahlrichtung 52a mit überdeckt. Weiterhin kann der Sichtbereich 51a möglichst breit ausgebildet sein, d. h. eine möglichst hohe Erstreckung parallel zur Fahrzeuglängsachse 3 aufweisen. Dies ermöglicht eine zuverlässige Erkennung des Umfeldes des Kraftfahrzeuges 2 neben dem Kraftfahrzeug. Entsprechend kann der Sichtbereich 51 in Form einer Radarkeule 51 hinsichtlich seiner Reichweite vom Kraftfahrzeug 2 weg kleiner ausgebildet sein, da lediglich, beispielsweise auf einer Autobahn nur die jeweils benachbarte Fahrspur überwacht werden muss.

Insgesamt wird also der Radarsensor 4a unter einem Winkel 100 und im Wesentlichen 45 Grad zur Fahrzeuglängsachse 3 im Kraftfahrzeug 2 eingebaut. Der Radarsensor 4a und auch die weiteren Radarasensoren 4b, 4c, 4d, können so ausgebildet sein, dass auch zwei oder mehrere Sichtbereiche 51, 52, 53 gleichzeitig ausgebildet werden können.

Zusammenfassend weist die Erfindung unter anderem die Vorteile auf, dass mit dem Radarsystem mehrere Funktionen, insbesondere Totwinkelassistent, Spurwechselassistent und Querverkehrsassistent im wesentlichen gleichzeitig auf einfache, kostengünstige und zuverlässige Weise in einem Kraftfahrzeug bereit gestellt werden können, ohne dass der Bauraum erheblich vergrößert werden muss.

Obwohl die vorliegende Erfindung vorstehend anhand bevorzugter Ausführungsbeispiele beschrieben wurde, ist sie nicht darauf beschränkt, sondern auf vielfältige Weise modifizierbar.

## Patentansprüche

1. Radarsystem (1) für Kraftfahrzeuge (2) mit zumindest zwei Radarsensoren (4a, 4b, 4c, 4d) zum Aussenden und Empfangen von Radarstrahlung zur Überwachung eines Umfelds des Kraftfahrzeugs (2), wobei die zumindest zwei Radarsensoren (4a, 4b, 4c, 4d) jeweils in einem Winkel (100) zwischen 40 Grad und 50 Grad zu einer Fahrzeuglängsachse(3) angeordnet sind und wobei die zumindest zwei Radarsensoren (4a, 4b, 4c, 4d) jeweils zumindest eine Antenne umfassen,
**dadurch gekennzeichnet, dass**
die zumindest zwei Radarsensoren (4a, 4b, 4c, 4d) derart ausgebildet sind, sodass die jeweilige Antenne einen verschwenkbaren Sichtbereich (51, 52, 53) von einem Winkel (100) zwischen zumindest -60 Grad und +60 Grad relativ zu einer Hauptabstrahlrichtung (52a) des jeweiligen Radarsensors (4a, 4b, 4c, 4d) aufweist, und
wobei eine Steuereinrichtung (S) zur Steuerung der Sichtbereiche (51, 52, 53) der zumindest einen Antenne zumindest eines der Radarsensoren (4a, 4b, 4c, 4d) angeordnet ist, den Sichtbereich (51, 52, 53) zumindest einer Antenne zumindest eines Radarsensors (4a, 4b, 4c, 4d) zwischen +45 Grad, 0 Grad und -45 Grad bezogen auf die Hauptabstrahlrichtung (52a) des zumindest einen Radarsensors(4a, 4b, 4c, 4d) einzustellen, und
wobei zumindest eine Antenne zumindest eines Radarsensors(4a, 4b, 4c, 4d) Sichtbereiche aufweist, die für unterschiedliche Winkel (101) relativ zu der Hauptabstrahlrichtung (52a) des jeweiligen Radarsensors (4a, 4b, 4c, 4d) unterschiedlich ausgebildet sind.

2. Radarsystem für Kraftfahrzeuge gemäß Anspruch 1, wobei
zumindest vier Radarsensoren (4a, 4b, 4c, 4d) jeweils symmetrisch zueinander angeordnet sind.

3. Radarsystem für Kraftfahrzeuge gemäß zumindest einem der Ansprüche 1-2,
wobei zumindest einer der Radarsensoren (4a, 4b, 4c, 4d) ausgebildet ist, im Wesentlichen gleichzeitig zumindest zwei hinsichtlich ihrer Richtung unterschiedliche Sichtbereiche, der zumindest einen Antenne bereitzustellen.

4. Radarsystem für Kraftfahrzeuge gemäß zumindest einem der Ansprüche 1 bis 3, wobei zumindest ein Radarsensor(4a, 4b, 4c, 4d) eine Mehrzahl von phasengesteuerten Antennen umfasst, deren jeweiliger Sichtbereich (51, 52, 53) mittels Amplituden- und/oder Phasenmodulation verschwenkbar ist.

5. Kraftfahrzeug (2) mit einem Radarsystem (1) gemäß zumindest einem der Ansprüche 1 bis 4.

6. Kraftfahrzeug gemäß Anspruch 5, wobei zumindest vier Radarsensoren symmetrisch links und rechts der Fahrzeuglängsachse (3) und in einem Front- und Heckbereich (3a, 3b) des Kraftfahrzeugs (2) angeordnet sind, und wobei die Radarsensoren (4a, 4b, 4c, 4d) mit einem jeweiligen Winkel (100) von 45 Grad zur Fahrzeuglängsachse (3) angeordnet sind.

7. Verwendung eines Radarsystems in einem Kraftfahrzeug gemäß zumindest einem der Ansprüche 1 bis 4 zur Totwinkelerkennung, Spurwechselhilfe und zur Querverkehrserkennung und insbesondere zusätzlich zur Unfallerkennung.

## Claims

1. Radar system (1) for motor vehicles (2), having at least two radar sensors (4a, 4b, 4c, 4d) for transmitting and receiving radar radiation for monitoring a surrounding area of the motor vehicle (2), wherein the at least two radar sensors (4a, 4b, 4c, 4d) are each arranged at an angle (100) of between 40 degrees and 50 degrees to a vehicle longitudinal axis (3) and wherein the at least two radar sensors (4a, 4b, 4c, 4d) each comprise at least one antenna,
**characterized in that**
the at least two radar sensors (4a, 4b, 4c, 4d) are configured such that the respective antenna has a steerable field of view (51, 52, 53) of an angle (100) of between at least -60 degrees and +60 degrees relative to a main emission direction (52a) of the respective radar sensor (4a, 4b, 4c, 4d), and
wherein a control device (S) for controlling the fields of view (51, 52, 53) of the at least one antenna of at least one of the radar sensors (4a, 4b, 4c, 4d) is arranged to set the field of view (51, 52, 53) of at least one antenna of at least one radar sensor (4a, 4b, 4c, 4d) to between +45 degrees, 0 degrees and -45 degrees with respect to the main emission direction (52a) of the at least one radar sensor (4a, 4b, 4c, 4d), and
wherein at least one antenna of at least one radar sensor (4a, 4b, 4c, 4d) has fields of view that are embodied differently for different angles (101) relative to the main emission direction (52a) of the respective radar sensor (4a, 4b, 4c, 4d).

2. Radar system for motor vehicles according to Claim 1, wherein
at least four radar sensors (4a, 4b, 4c, 4d) are each arranged symmetrically with respect to one another.

3. Radar system for motor vehicles according to at least one of Claims 1-2,
wherein at least one of the radar sensors (4a, 4b, 4c, 4d) is embodied to provide at least two fields of view of the at least one antenna, which differ in terms of their direction, substantially at the same time.

4. Radar system for motor vehicles according to at least one of Claims 1 to 3, wherein
at least one radar sensor (4a, 4b, 4c, 4d) comprises a plurality of phased-array antennas, whose respective field of view (51, 52, 53) is steerable by means of amplitude and/or phase modulation.

5. Motor vehicle (2) having a radar system (1) according to at least one of Claims 1 to 4.

6. Motor vehicle according to Claim 5, wherein at least four radar sensors are arranged symmetrically to the left and right of the vehicle longitudinal axis (3) and in a front and rear region (3a, 3b) of the motor vehicle (2), and wherein the radar sensors (4a, 4b, 4c, 4d) are arranged at a respective angle (100) of 45 degrees to the vehicle longitudinal axis (3).

7. Use of a radar system in a motor vehicle according to at least one of Claims 1 to 4 for blind-angle detection, lane change assistance and intersection detection and in particular additionally for accident detection.

## Revendications

1. Système radar (1) pour véhicules automobiles (2), comprenant au moins deux capteurs radar (4a, 4b, 4c, 4d) pour émettre et recevoir un rayonnement radar servant à surveiller un entourage du véhicule automobile (2), les au moins deux capteurs radar (4a, 4b, 4c, 4d) étant respectivement disposés à un angle (100) entre 40 degrés et 50 degrés par rapport à un axe longitudinal de véhicule (3), et les au moins deux capteurs radar (4a, 4b, 4c, 4d) comprenant respectivement au moins une antenne,
**caractérisé en ce que** les au moins deux capteurs radar (4a, 4b, 4c, 4d) sont réalisés de telle sorte que l'antenne respective présente un champ de vision pivotant (51, 52, 53) d'un angle (100) entre au moins -60 degrés et +60 degrés par rapport à une direction de rayonnement principale (52a) du capteur radar (4a, 4b, 4c, 4d) respectif, et
dans lequel un dispositif de commande (S) permettant de commander les champs de vision (51, 52, 53) de ladite au moins une antenne d'au moins l'un des capteurs radar (4a, 4b, 4c, 4d) est disposé pour régler le champ de vision (51, 52, 53) d'au moins une antenne d'au moins un capteur radar (4a, 4b, 4c, 4d) entre +45 degrés, 0 degrés et -45 degrés par rapport à la direction de rayonnement principale (52a) du au moins un capteur radar (4a, 4b, 4c, 4d), et
dans lequel au moins une antenne d'au moins un capteur radar (4a, 4b, 4c, 4d) présente des champs de vision qui sont réalisés différemment pour différents angles (101) par rapport à la direction de rayonnement principale (52a) du capteur radar (4a, 4b, 4c, 4d) respectif.

2. Système radar pour véhicules automobiles selon la revendication 1, dans lequel au moins quatre capteurs radar (4a, 4b, 4c, 4d) sont respectivement disposés de manière symétrique les uns par rapport aux autres.

3. Système radar pour véhicules automobiles selon au moins l'une des revendications 1 à 2, dans lequel au moins l'un des capteurs radar (4a, 4b, 4c, 4d) est réalisé pour fournir à ladite au moins une antenne de manière substantiellement simultanée au moins deux champs de vision différents quant à leur direction.

4. Système radar pour véhicules automobiles selon au moins l'une des revendications 1 à 3, dans lequel au moins un capteur radar (4a, 4b, 4c, 4d) comprend une pluralité d'antennes à commande de phase dont le champ de vision (51, 52, 53) respectif peut pivoter au moyen d'une modulation d'amplitude et/ou de phase.

5. Véhicule automobile (2) comprenant un système radar (1) selon au moins l'une des revendications 1 à 4.

6. Véhicule automobile selon la revendication 5, dans lequel au moins quatre capteurs radar sont disposés de manière symétrique à gauche et à droite de l'axe longitudinal de véhicule (3) et dans une zone avant et une zone arrière (3a, 3b) du véhicule automobile (2), et dans lequel les capteurs radar (4a, 4b, 4c, 4d) sont disposés à un angle (100) respectif de 45 degrés par rapport à l'axe longitudinal de véhicule (3).

7. Utilisation d'un système radar dans un véhicule automobile selon au moins l'une des revendications 1 à 4 pour la détection d'angles morts, l'assistance au changement de voie et pour la détection de trafic transversal et en particulier en plus pour la détection d'accidents.
